# EUROPEAN PATENT SPECIFICATION

(11) **EP 0 403 455 B1**
(45) Date of publication and mention of the grant of the patent: **20.11.1996**
(21) Application number: 90850187.7
(22) Date of filing: 18.05.1990
(51) Int. Cl.: H04B 10/12

(54) **Arrangement for controlling the bandwidth in equipment for transmitting via singel-mode fibre regardless of signal format**
Vorrichtung zur Steuerung der Bandbreite in einer Übertragungseinrichtung mittels Monomodenfaser, unabhängig vom Signalformat
Dispositif de commande de largeur de bande d'équipement de transmission par fibre monomode indépendamment du format du signal

(30) Priority: 16.06.1989 SE 8902164
(43) Date of publication of application: 19.12.1990
(73) Proprietor: TELIA AB, 123 86 Farsta (SE)
(72) Inventor: Vucins, Viesturs, S-123 86 Farsta (SE)
(74) Representative: Karlsson, Berne

(56) References cited:
- GB-A- 2 113 035
- US-A- 4 694 471
- FERNMELDETECHNISCHE ZEITSCHRIFT FTZ. vol. 39, no. 7, July 1986, BERLIN DE pages 490 - 500; BÜTTNER ET. AL.: 'Optische Nachrichtenübertragungssysteme für den Weitverkehr'

## Description

### FIELD OF THE INVENTION

The invention relates to a telecommunications network comprising an arrangement for controlling the bandwidth in equipment for transmitting via single-mode connections, that is to say via optical signals in single-mode fibre. The arrangement enables the bandwidth to be controlled as required by the customer and for differentiated charging.

### PRIOR ART

Commercially available equipment for data communication via optical fibre is today normally based on multi-mode technology. Communication is used, for example, between local networks, channel extensions and intelligent multiplexors. The network of Televerket, however, is built up with single-mode fibres due to their better transmission characteristics. Multi-mode fibres cannot be simply joined to single-mode fibres without strong signal attenuation, and it has therefore been previously necessary to arrange separate multi-mode connections in parallel with the single-mode connections at considerable costs. The arrangement according to the invention enables multi-mode fibres and single-mode fibres to be coupled together.

In data communication on electrical lines, it has previously not been possible to utilize optical fibres. The arrangement according to the invention also enables electrical connections to be coupled together with single-mode fibres.

By using the existing Televerket network, the customer utilization of the fibres can also be controlled, which can be used in charging. The arrangement according to the invention particularly enables the customer's useful bandwidth to be controlled.

### SUMMARY OF THE INVENTION

The invention thus provides a telecommunications network comprising an arrangement for controlling the bandwidth in equipment for transmitting via single-mode connections between equipments regardless of their signal format as defined in claim 1.

### BRIEF DESCRIPTION OF THE DRAWINGS

The invention is described in detail below with reference to the attached drawings, in which:
Figure 1 is a basic diagram of the arrangement according to the invention, and
Figure 2 shows an embodiment of the invention.

### DETAILED DESCRIPTION OF THE PREFERRED EMBODIMENTS OF THE INVENTION

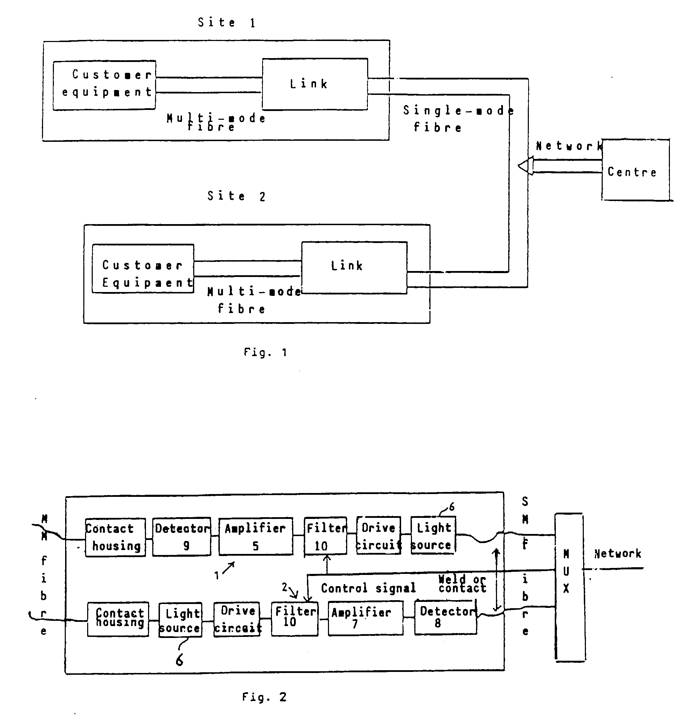

Figure 1 shows an overview of the application of the present invention. The customer application consists of equipment which is located in different sites and the customer wishes to be able to communicate between these. The customer equipment is in this case adapted for communication in a multi-mode fibre. In data communication, multi-mode fibre is the type generally found. Since the multi-mode fibre has a bigger core, approximately 50 µm, it is easier to build inexpensive optical transmitters and to join such fibres. However, multi-mode fibre has worse transmission characteristics than single-mode fibre, with the result that multi-mode fibre is not suitable for telecommunication.

The Televerket network therefore utilizes single-mode fibre with a small core, approximately 10 µm. This type of fibre was originally more expensive to produce, but the fibre is now less expensive than multi-mode fibre due to the large amounts of fibre which are used in the telecommunication network.

Due to the different core sizes of the fibre types, it is not possible to couple these directly together without great losses. For this reason, multi-mode fibre has been previously installed for producing the communication in Figure 1 between equipment of multi-mode type despite the existing single-mode fibre network.

Figure 2 shows an embodiment of the arrangement which forms a link between a multi-mode connection and the single-mode fibre. The arrangement is divided into two channels, a transmitting channel 1 and a receiving channel 2. The customer equipment is coupled by means of multi-mode fibres 3 to the single-mode fibres 4 via the arrangement. The transmitting channel comprises a variable amplifier 5 and a transmitter 6.

The transmitting channel also comprises a detector 9 for receiving signals from the customer equipment which are transmitted via the multi-mode connection 3. The detector 9 converts the optical signals into electrical signals which are fed to the amplifier 5. The receiving channel also comprises an amplifier 7, a detector 8 and a transmitter 11. The amplifiers 5 and 7 are analog amplifiers with a wide bandwidth. Moreover, they must be direct-current coupled. The characteristics of the amplifiers mean that the arrangement can be used regardless of the signal protocol of the equipment since the signals are converted completely linearly. The transmitters 6 and 11 convert the signals from the amplifier into light signals which are transmitted in the respective fibre.

The equipment communicates with another equipment located at a distance, which other equipment is connected to the single-mode fibre via a similar arrangement. The signals are received by the detector 8 which converts the light signals into electrical signals. The amplifier 7 has a gain which is adapted in such a manner that the electrical signals from the detector 8 are converted to the same electrical signals which were fed to the amplifier 5. When the arrangement is coupled in, the gain of the amplifiers is finely adjusted so that the link becomes completely transparent. Here, too, the arrangement comprises a transmitting channel 1 and a receiving channel 2.

According to the invention, the transmitting and receiving channels each comprise an electrical filter. The aim of the filter is to limit the bandwidth of the arrangement. The bandwidth can also be limited by the choice of amplifier. By determining the bandwidth of the arrangement, the transmission capacity of the arrangement is controlled. This also provides control over the customer's use of the network and makes it possible to charge the customer afterwards.

According to the invention, the bandwidth of the filters 10 can be controlled from a centre which controls the network.

The control signals can be transmitted via the single-mode fibres of the network by using multiplex circuits, for example for wavelength multiplex or via electrically coded signals which are transmitted via the fibres. The invention thus makes it possible to offer general links with adjustable transmission capacity. The links are adjusted as required by the customer and charged thereafter.

The arrangement according to the invention thus enables the customer to be charged in accordance with the transmission capacity of the link.

Some preferred embodiments of the present invention have been described above. The invention is limited only by the patent claims below.

## Claims

1. A telecommunications network, for the duplex transmission of data, and arranged so that a first data signal can be modulated on an optical carrier and launched into a multi-mode fibre, and an optical carrier modulated with a second data signal can be demodulated to extract the second data signal, characterised in that said telecommunications network includes a monomode optical transmission path and a convertor for transferring a data signal from a multi-mode optical fibre to a single mode optical fibre and vice versa, said convertor being transparent to optical carrier, or signal modulation, format, said convertor having first means for converting (9, 5), a modulated optical carrier received from a multi-mode optical fibre into a first electric signal, a first optical transmitter (6), for converting said first electric signal to a signal modulated on an optical carrier launched into a mono-mode optical fibre, second means for converting (8, 7), an optical carrier modulated with a data signal received from a mono-mode optical fibre into a second electric signal, a second optical transmitter for converting said second electric signal into an optical carrier modulated with a data signal launched into a multi-mode optical fibre, and means (10), for controlling transmission capacity available for transmission and/or reception over said first and second mono-mode optical fibres.

2. A telecommunications network as claimed in claim 1, characterised in that said means (10), for controlling said transmission capacity is a bandwidth filter having a controllable passband.

3. A telecommunications network as claimed in claim 2, characterised in that said telecommunications network includes central control means which transmits a signal to said means (10) for controlling said bandwidth filters passband.

4. A telecommunications network as claimed in claim 3, characterised in that said central control means is arranged to adjust said bandwidth filters passband in response to a command signal received from a subscriber.

5. A telecommunications system as claimed in either claim 3, or 4, characterised in that said signal to said means (10) for controlling said bandwidth filters passband is wavelength division multiplexed onto said mono-mode optical fibre.

6. A convertor for use in a telecommunications network as claimed in any of claims 1 to 5, adapted for transferring a data signal from a multi-mode optical fibre to a single mode optical fibre and vice versa, characterised in that said convertor is transparent to optical carrier, or signal modulation, format, said convertor having first means for converting (9, 5), a modulated optical carrier received from a multi-mode optical fibre into a first electric signal, a first optical transmitter (6), for converting said first electric signal to a signal modulated on an optical carrier launched into a mono-mode optical fibre, second means for converting (8, 7), an optical carrier modulated with a data signal received from a mono-mode optical fibre into a second electric signal, a second optical transmitter for converting said second electric signal into an optical carrier modulated with a data signal launched into a multi-mode optical fibre, and means (10), for controlling transmission capacity available for transmission and/or reception over said first and second mono-mode optical fibres.

7. A convertor as claimed in claim 6, characterised in that said means (10), for controlling said transmission capacity is a bandwidth filter having a controllable passband.

## Patentansprüche

1. Datenübertragungsnetzwerk für Duplex-Übertragung von Daten, das so eingerichtet ist, daß ein erstes Datensignal auf einen optischen Träger moduliert werden kann und dann in eine Multimodefaser eingegeben werden kann, und daß ein optischer Träger, der mit einem zweiten Datensignal moduliert ist, demoduliert werden kann, um da zweite Datensignal zu extrahieren, dadurch gekennzeichnet, daß das Datenübertragungsnetzwerk einen optischen Einzelmodeübertragungspfad und einen Wandler zum Übertragen eines Datensignals von einer optischen Multimodefaser zu einer optischen Einzelmodefaser und umgekehrt aufweist, wobei der Wandler für das Format des optischen Trägers oder der Signalmodulation transparent ist, wobei der Wandler ein erstes Mittel zum Wandeln (9,5) eines modulierten optischen Trägers, der von einer optischen Multimodefaser empfangen wird, in ein erstes elektrisches Signal, einen ersten optischen Sender (6) zum Wandeln des ersten elektrischen Signals in ein Signal, das auf einen optischen Träger moduliert wird, der in eine optische Einzelmodefaser eingegeben wird, zweite Mittel zum Wandeln (8,7) eines optischen Trägers, der mit einem Datensignal moduliert ist, der von einer optischen Einzelmodefaser empfangen wird, in ein zweites elektrisches Signal, einen zweiten optischen Sender zum Umwandeln des zweiten elektrischen Signals in einen optischen Träger, der mit dem Datensignal moduliert ist, der in eine optische Multimodefaser eingegeben wird, und ein Mittel (10) zum Steuern und/oder Kontrollieren der Übertragungskapazität aufweist, die für Senden und/oder Empfangen über die ersten und zweiten optischen Einzelmodefasern zur Verfügung steht.

2. Datenübertragungsnetzwerk nach Anspruch 1, dadurch gekennzeichnet, daß das Mittel (10) zum Steuern und/oder Kontrollieren der Übertragungskapazität ein Bandbreitenfilter mit einem steuerbaren Durchlaßband ist.

3. Datenübertragungsnetzwerk nach Anspruch 2, dadurch gekennzeichnet, daß das Datenübertragungsnetzwerk ein zentrales Steuermittel aufweist, das ein Signal zu dem Mittel (10) zum Steuern des Durchlaßbandes des Bandbreitenfilters sendet.

4. Datenübertragungsnetzwerk nach Anspruch 3, dadurch gekennzeichnet, daß das zentrale Steuermittel so ausgebildet ist, daß es das Durchlaßband der Bandbreitenfilter als Reaktion auf ein Anweisungssignal einstellt, das von einem Teilnehmer empfangen wird.

5. Datenübertragungssystem nach Anspruch 3 oder 4, dadurch gekennzeichnet, daß das Signal zum Mittel (10) zum Steuern des Durchlaßbandes des Bandbreitenfilters auf die optische Einzelmodefaser wellenlängenteilungs-multiplexiert ist.

6. Wandler für Verwendung in einem Datenübertragungsnetzwerk nach einem der Ansprüche 1 bis 5, der zum Übertragen eines Datensignals von einer optischen Multimodefaser zu einer optischen Einzelmodefaser und umgekehrt geeignet ist, dadurch gekennzeichnet, daß der Wandler transparent für das Format des optischen Trägers oder der Signalmodulation ist, daß der Wandler ein erstes Mittel zum Wandeln (9,5) eines modulierten optischen Trägers, der von einer optischen Multimodefaser empfangen wird, in ein erstes elektrisches Signal, einen ersten optischen Sender (6) zum Wandeln des ersten elektrischen Signals in ein Signal, das auf einen optischen Träger moduliert wird, der in eine optische Einzelmodefaser eingegeben wird, ein zweites Mittel zum Wandeln (8,7) eines optischen Trägers, der mit einem Datensignal moduliert ist und von einer optischen Einzelmodefaser empfangen wird, in ein zweites elektrisches Signal, einen zweiten optischen Sender zum Wandeln des zweiten elektrischen Signals in einen optischen Träger, der mit einem Datensignal moduliert ist und in eine optische Multimodefaser eingegeben wird, und Mittel (10) zum Steuern und/oder Kontrollieren der Übertragungskapazität aufweist, die für Senden und/oder Empfang über die ersten und zweiten optischen Einzelmodefasern zur Verfügung steht.

7. Wandler nach Anspruch 6, dadurch gekennzeichnet, daß das Mittel (10) zum Steuern und/oder Kontrollieren der Übertragungskapazität ein Bandbreitenfilter ist, der ein steuerbares Durchlaßband aufweist.

## Revendications

1. Réseau de télécommunication, pour la transmission de données en duplex, et agencé de sorte qu'un premier signal de données peut être modulé sur une porteuse optique et lancé dans une fibre multimode, et une porteuse optique modulée avec un deuxième signal de données peut être démodulée pour extraire le deuxième signal de données, caractérisé en ce que ledit réseau de télécommunication comprend un chemin de transmission optique monomode et un convertisseur pour transférer un signal de données d'une fibre optique multimode à une fibre optique monomode et inversement, ledit convertisseur étant transparent au format de porteuse optique ou de modulation de signal, ledit convertisseur comprenant des premiers moyens (9,5) de conversion d'une porteuse optique modulée reçue en provenance d'une fibre optique multimode en un premier signal électrique, un premier émetteur optique (6) pour convertir ledit premier signal électrique en un signal modulé sur une porteuse optique lancée dans une fibre optique monomode, des deuxièmes moyens (8,7) de conversion d'une porteuse optique modulée avec un signal de données reçueenprovenance d'une fibre optique monomode en un deuxième signal électrique, un deuxième émetteur optique pour convertir ledit deuxième signal électrique en une porteuse optique modulée avec un signal de données, lancée dans une fibre optique multimode, et des moyens (10) de commande de la capacité de transmission disponible pour émission et/ou réception sur lesdites première et deuxième fibres optiques monomodes.

2. Réseau de télécommunication suivant la revendication 1, caractérisé en ce que lesdits moyens (10) de commande de ladite capacité de transmission sont constitués par un filtre de largeur de bande ayant une bande passante réglable.

3. Réseau de télécommunication suivant la revendication 2, caractérisé en ce que ledit réseau de télécommunication comprend un dispositif de commande centrale qui envoie un signal auxdits moyens (10) pour commander la bande passante desdits filtres de largeur de bande.

4. Réseau de télécommunication suivant la revendication 3, caractérisé en ce que ledit dispositif de commande centrale est prévu pour régler la bande passante desdits filtres de largeur de bande en réponse à un signal d'instruction fourni par un abonné.

5. Système de télécommunication suivant la revendication 3 ou 4, caractérisé en ce que ledit signal envoyé auxdits moyens (10) pour commander la bande passante desdits filtres de largeur de bande est multiplexé par division de longueur d'onde sur ladite fibre optique monomode.

6. Convertisseur utilisable dans un réseau de télécommunication suivant une quelconque des revendications 1 à 5, prévu pour transférer un signal de données d'une fibre optique multimode à une fibre optique monomode et inversement, caractérisé en ce que ledit convertisseur est transparent au format de porteuse optique, ou de modulation de signal, ledit convertisseur comprenant des premiers moyens (9,5) de conversion d'une porteuse optique modulée reçue en provenance d'une fibre optique multimode en un premier signal électrique, un premier émetteur optique (6) pour conversion dudit premier signal électrique en un signal modulé sur une porteuse optique lancée dans une fibre optique monomode, des deuxièmes moyens (8,7) de conversion d'une porteuse optique modulée avec unsignal de données reçue en provenance d'une fibre optique monomode en un deuxième signal électrique, un deuxième émetteur optique pour conversion dudit deuxième signal électrique en une porteuse optique modulée avec un signal de données lancée dans une fibre optique multimode, et des moyens (10) de commande de la capacité de transmission disponible pour émission et/ou réception sur lesdites première et deuxième fibres optiques monomodes.

7. Convertisseur suivant la revendication 6, caractérisé en ce que lesdits moyens (10) de commande de ladite capacité de transmission sont constitués par un filtre de largeur de bande ayant une bande passante réglable.
